# EUROPEAN PATENT SPECIFICATION

(11) **EP 3 343 053 B1**
(45) Date of publication and mention of the grant of the patent: **05.02.2020**
(21) Application number: 17205970.1
(22) Date of filing: 07.12.2017
(51) Int. Cl.: F16C 33/24, F16C 37/00, F16C 17/02, F16C 33/10, F16C 33/12, F16C 33/14

(54) **JOINT-LESS CONTINUOUS PLAIN JOURNAL BEARING**
VERBINDUNGFREIES DURCHGEHENDES RADIAL-GLEITLAGER
PALIER LISSE RADIAL CONTINU SANS JOINT

(30) Priority: 16.12.2016 IN 201641042871
(43) Date of publication of application: 04.07.2018
(73) Proprietor: AI ALPINE US BIDCO INC., Wilmington, Delaware 19801 (US)
(72) Inventor: RANGHARAJHAN, Muralikrishna, 560066 Bangalore, Karnataka (IN); SEBASTIAN KATHAYANATT, Savio, 560066 Bangalore, Karnataka (IN); MATH, Souvik, 560066 Bangalore, Karnataka (IN)
(74) Representative: Torggler & Hofinger Patentanwälte

(56) References cited:
- EP-A1- 1 233 197
- DD-A1- 155 917
- DE-C- 930 004
- GB-A- 1 359 595
- GB-A- 2 022 722
- JP-A- 2004 144 255
- JP-U- S56 171 423
- US-A- 5 120 140
- US-A1- 2009 087 126

## Description

This disclosure relates generally to journal bearings, and more specifically to journal bearings having joint-less continuous body and at least three angular sectors in a cross-section perpendicular to a bore axis.

Journal bearings are widely used in engine applications for journaling a shaft of the engine. In general, the journal bearings are made from high strength materials and may have one or more coatings. For example, typical journal bearings have arcuate steel backing onto which one or more layers of other softer or harder materials are applied to form the one or more coatings. The steel backing provides structural rigidity and load bearing capacity to the journal bearings. The coatings help to reduce friction, wear, corrosion, fatigue, seizure, and cavitation. The coatings may provide additional functionalities such as, for example, lubrication, heat dissipation, acceptable embeddability, strength for load bearing, and conformability to the journal bearings. Sometime, while designing a suitable coating, one or more functionalities may be compromised to obtain an optimum operation of the journal bearing. For example, a layer of the coating of the journal bearing that contacts the shaft during its operation may be designed to increase embeddability of the layer although it compromises on wear resistance.

Methods for preparing the currently known journal bearings include multiple manufacturing and assembly/integration steps. Many of the conventional journal bearings are split bearings having two halves that together form a full circle. One or more of the desired functionalities of such split bearings may be achieved by selection of suitable high strength materials (e.g., steel) and/or by modifying microstructures of the material used. Multilayered coatings may be formed on the steel backing of the two halves of the journal bearing by using techniques such as, for example, sputtering, electrochemical deposition, electro less plating, and spraying.

Document GB 2 022 722 A describes a journal bearing for supporting a rotating shaft comprising a sintered bush inserted in a seating. A number of portions of reduced permeability are symmetrically distributed on the inner surface of the sintered bush. The sintered material for the production of the bush is selected from iron and its alloys; steel of any formation, including stainless steels; copper alloys; aluminium, zinc and their respective alloys.

It is desirable to have a journal bearing that is easy to manufacture and have customized sections to perform desired functionalities of the journal bearing.

### BRIEF DESCRIPTION

According to the invention there is provided a journal bearing for a shaft with the features of claim 1.

### DRAWINGS

Various features, aspects, and advantages of the present disclosure will become better understood when the following detailed description is read with reference to the accompanying drawings in which like characters represent like parts throughout the drawings. Unless otherwise indicated, the drawings provided herein are meant to illustrate only the key features of the disclosure. These key features are believed to be applicable in a wide variety of systems. As such, the drawings are not meant to include all conventional features known to those of ordinary skill in the art to be required for practicing the invention.
FIG. 1 is a perspective view of a cross-section in the centerline axis of a system including a journal bearing and a shaft in accordance with an illustrative embodiment of the present disclosure.
FIG. 2 is a schematic cross-sectional view perpendicular to a bore axis of the journal bearing in accordance with an illustrative embodiment of the present disclosure.
FIG. 3 is a portion of a schematic cross-sectional view perpendicular to a bore axis illustrating an intersection of two angular sectors of the journal bearing in accordance with some embodiments of the present disclosure.
FIG. 4 is a schematic cross-sectional view perpendicular to bore axis of the journal bearing and the shaft of an embodiment in accordance with the invention.

### DETAILED DESCRIPTION

In the following specification and the claims that follow, the singular forms "a," "an," and "the" include plural referents unless the context clearly dictates otherwise. Approximating language, as used herein throughout the specification and claims, may be applied to modify any quantitative representation that could permissibly vary without resulting in a change in the basic function to which it is related. Accordingly, a value modified by a term "about" may not be limited to the precise value specified, and may include values that differ from the specified value, without affecting the intended function. In at least some instances, the approximating language may correspond to the precision of an instrument for measuring a value.

To more clearly and concisely describe and point out the subject matter, the following definitions are provided for specific terms, which are used throughout the following description and the appended claims, unless specifically denoted otherwise with respect to particular embodiments.

As used herein, the term "joint-less, continuous body" refers to a single body without any joints and/or any splits. A joint-less body is formed as a monolithic single piece during manufacturing. Thereby, a joint-less body does not have any joints that are formed after preparation of individual, macrostructural parts of the body. In other words, the joint-less body is not formed by initially preparing the macrostructural parts and then joining them by using any physical, chemical, and /or mechanical means. A continuous body does not have any split or break in the body. A continuous body contrasts with a discontinuous body that has two or more parts that are placed together to function as a single body during its operation. The term "angular sector" refers to a portion in the cross-section of a joint less, continuous body that is enclosed within two radii, inner surface and outer surface of the joint-less, continuous body in that cross-section. The angular sector is defined and referred in terms of its angular span. The term "angular span" of an angular sector refers to an angle subtended by the arc of an inner surface of the angular sector. Specifically, an angular span of an angular sector is the central angle subtended by the arc of a circumference of an inner surface of the angular sector. In other words, angular span generally refers to an angle between the two radii of the angular sector.

The present disclosure is directed to a journal bearing having specific configurations. Illustrative and inventive embodiments of this disclosure disclose a journal bearing for a shaft. The journal bearing includes a joint-less, continuous body having an inner surface and an outer surface. The inner surface defines a bore for receiving the shaft. A cross-section of the joint-less, continuous body perpendicular to a bore axis includes at least three angular sectors.

In some embodiments, the journal bearing is manufactured by an additive manufacturing method. In the additive manufacturing method, a three-dimensional object is built by adding materials layer-by-layer. Manufacturing an object by spray coating is a non-limiting example of additive manufacturing. This is in contrast to the conventional methods of forming a three-dimensional object by joining one macrostructural part to another. A variety of different materials can be used for additive manufacturing such, as, but not limited to, metals, alloys, plastics, and composites. Additive manufacturing is particularly desirable in those areas where highly complex structures are needed, which is difficult to achieve via conventional manufacturing methods due to their inherent limitations. Manufacturing the journal bearing by additive manufacturing offers expanded design space, such as, for example, inclusion of non-uniform microstructure in a component of the journal bearing.

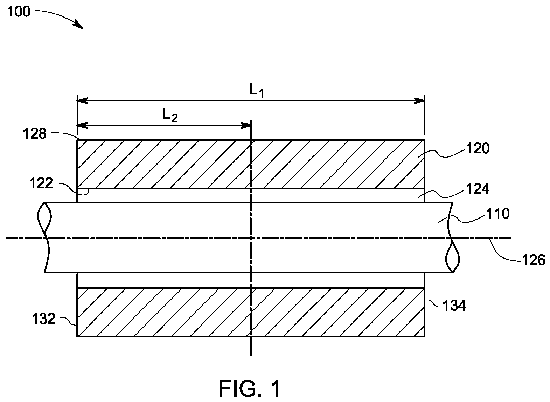

FIG. 1 is a schematic representation of an axial cross-section of a system 100 not in accordance with the present invention. The system 100 includes a shaft 110 and a journal bearing 120 for the shaft 110. The journal bearing has an inner surface 122 that defines a bore 124 to receive the shaft 110. The bore has a centerline, bore axis 126. The journal bearing has an outer surface 128. The journal bearing 120 is operatively coupled to the shaft 110 such that the journal bearing 120 and the shaft 110 operate as a pair during the operation of the system 100. The journal bearing 120 and the shaft 110 operating as a pair during the operation of the system 100 does not necessitate or indicate the existence of any physical bonding between the journal bearing 120 and the shaft 110. The joint-less, continuous body of the journal bearing 120 has a first end 132 and a second end 134, defining a length L1 of the journal bearing as a shortest distance between the first end 132 and the second end 134. The journal bearing 120 supports shaft 110 during operation of the system 100 and helps the shaft 110 to rotate or oscillate freely inside the journal bearing 120 and transmit the radial load to a stationary structure on which the bearing 120 is mounted.

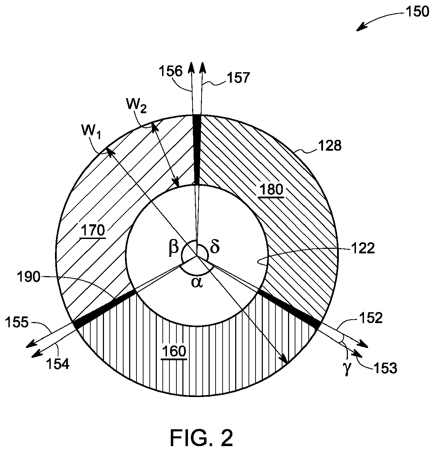

FIG. 2 illustrates a cross-section 150 of the joint-less, continuous body of the journal bearing 120, which is not in accordance with the invention, in a direction that is perpendicular to the bore axis 126. The cross-section 150 of the joint-less, continuous body of the journal bearing illustrates the inner surface 122, the outer surface 128, and at least three angular sectors 160, 170, and 180, each of which is defined by two radii and respective arcs of the inner surface 122 and the outer surface 128. For example, the angular sector 160 is an area of the joint-less, continuous body that is defined by the radii 153 and 154 and arcs of the inner surface 122 and the outer surface 128 between the radii 153 and 154. Similarly, the angular sector 170 is an area defined by the radii 155 and 156 and arcs of the inner surface 122 and the outer surface 128 between the radii 155 and 156; and the angular sector 180 is an area defined by the radii 157 and 152 and arcs formed by the inner surface 122 and the outer surface 128 between the radii 157 and 152. The angular segment 160 has an angular span of α, the angular sector 170 has an angular span of β, and the angular sector 180 has an angular span of δ subtended by the respective arcs of the inner surface 122 (i.e., the central angle between respective pair of radii selected from radii 153, 154, 155, 156, 157, and 152). The angular spans of the different angular sectors may be designed purely based on the functionalities of the angular sectors and need not be designed to be axi-symmetric. A width "W1" of the journal bearing along a cross-section is a shortest distance in the cross-section between two opposite points in the outer surface 128 of the joint-less, continuous body of the journal bearing 120. A width "W2" of an angular sector along the cross-section 150 may be a shortest distance in the cross-section between the inner surface 122 and the outer surface 128 of the joint-less, continuous body.

In the illustration in FIG. 2, the angular sector 170 and the angular sector 180 neighbor the angular sector 160. In a similar manner, the angular sector 170 has angular sectors 160 and 180 as neighbors, and the angular sectors 160 and 170 neighbor the angular sector 180. Each one of the at least three angular sectors 160, 170, 180 includes at least one of a different microstructure or a different composition than each of neighboring ones of the at least three angular sectors. Thus, in some embodiments, in the illustrated embodiments of FIG. 2 having three angular sectors 160, 170, and 180, each of the angular sectors 160, 170, and 180 are different in microstructure, in composition, or in a combination of microstructure and composition from the other two angular sectors.

In some embodiments, at least two of the angular sectors 160, 170, or 180 extend along the length L₁ (illustrated in FIG. 1) of the joint-less, continuous body. Thus, in some embodiments, a cross-section at any distance in the length L₁ will have at least two of the at least three angular sectors. In some embodiments, the cross- section 150 may be at any distance L₂ between the first end 132 and the second end 134 of the body of the journal bearing 120 illustrated in FIG. 1.

The joint-less, continuous body need not have at least three angular sectors in all the cross-sections perpendicular to the bore axis. However, it comprises at least three angular sectors in at least one of the cross-sections perpendicular to the bore axis. In some embodiments, the joint-less, continuous body comprises at least three angular sectors in all the cross-sections perpendicular to the bore axis. In some embodiments, the distance L₂, shown in FIG. 1, of the cross-section from the first end 130 is at least 10% of the length L₁ of the body of the journal bearing 120. In certain embodiments, the distance L₂ of the cross-section is half of the length L₁, thus defining a cross-section at the center of the joint-less, continuous body of the journal bearing 120. In certain embodiments, a cross-section 150 at any distance in the length L₁ will have all of the at least three angular sectors.

The joint-less, continuous body of the journal bearing may have any outer and/or inner shapes that may include further optional structural variations, such as, for example, grooves, holes, and/or lobes. In some embodiments, the journal bearing may have any additional outer and/or inner structural extensions to the joint- less, continuous body, such as, for example, extensions of grooves, holes, and/or lobes that may form non-continuous discrete tilt pads. In some embodiments, the joint-less, continuous body has a cylindrical outer surface and a cylindrical inner surface. In some embodiments, the joint-less, continuous body is a joint-less, continuous cylindrical body with a circular or an elliptical bore. Thus, the inner surface of the cylindrical body may define a circular bore or an elliptical bore aiding operability of the combination of the shaft and the journal bearing.

The at least three angular sectors of the cross-section 150 may have any angular spans that enhance functionalities of the at least three angular sectors and improves overall performance of the journal bearing. A greater angular span of a particular angular sector may enhance a functionality associated with that angular sector. In illustrative embodiments, each of the at least three angular sectors include an angular span of at least 5°.

In some embodiments, along the length of the joint-less, continuous body, the number of angular sectors may vary in different cross-sections perpendicular to the bore axis. In some embodiments, depending on the functionalities of each of the angular sectors, an angular span of a particular angular sector may be varied in different cross-sections perpendicular to the bore axis. In some embodiments, an angular span of a particular angular sector may be continuously varied along the length of the joint-less, continuous body. In some embodiments, an angular span of a particular angular sector may be continuously varied throughout the length of the joint- less, continuous body. In a non-limiting example, an angular span of an angular sector is continuously decreased from the central cross-section to the first end 132 and the second end 134. In another non-limiting example, an angular span of an angular sector is continuously decreased from the first end 132 to the second end 134. In some embodiments, a location of an angular sector with respect to the bottom of a stationary journal bearing may be different in different cross-sections along the length L₁ of the body. In some embodiments, a location of an angular sector is continuously tilted in successive cross-sections while measured from the central cross-section to the first end 132 and/or the second end 134. In another non-limiting example, a location of an angular sector is tilted continuously in successive cross-sections while measured from the first end 132 to the second end 134.

The at least three angular sectors of the cross-section 150 are adjacent to each other. In some embodiments, having three angular sectors as illustrated in FIG. 2, the three angular sectors are blended with each other at their intersections 190. In the embodiments having more than three angular sectors, each of the angular sectors are blended with both the neighbors in the intersections 190 thereof. Thus, the intersection 190 of any two angular sectors are in a diffused state without having any specific border or joints within the intersection 190 to demarcate the angular sectors. Further, the blending of the neighboring angular sectors in the intersection 190 leads to a monolithic joint-less, continuous body having the two neighboring angular sectors. The monolithic architecture ensures that functionally distinguishable aspects of each of the neighboring sectors are all interwoven via blending, rather than containing architecturally separate components. The blending of the neighboring angular sectors in the intersections 190 ensures a continuous, strong journal bearing 120 without rendering the intersections 190 of the angular sectors as weak points susceptible to cracking or breaking during operation.

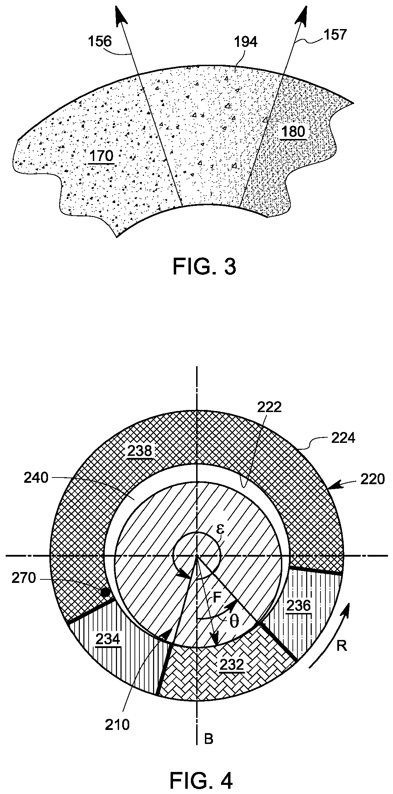

The angular sectors may be blended with one another in the intersections 190 in various ways. In some embodiments, the intersections include at least one of a microstructural gradation or a compositional gradation along an angular span, as shown, for example, in FIG. 3. FIG. 3 illustrates a graded intersection 194 of the two angular sectors 170 and 180 such that a density of the material of the angular sector 170 gradually decreases and a density of the material of the angular sector 180 gradually increases in the intersection 194 when moving from the angular sector 170 to the angular sector 180 in between the radii 156 and 157. For example, if a first angular sector is compositionally different from a neighboring, second angular sector, then the intersection of the first angular sector and the neighboring, second angular sector may have a compositional gradation. The compositional gradation may be formed by the gradual variation of the composition of the intersection from the composition of the first angular sector to the composition of the second angular sector, along an angular span. In another example, if the two neighboring angular sectors are microstructurally different from each other, then their intersection may have a microstructural variation along an angular span. Non-limiting examples of a microstructural difference between any two angular sectors include differences in grain size, grain shape, intergranular boundary, or porosity. In some embodiments, the intersection 190 of the any two angular sectors span a finite angular span γ of at least 1° as shown in FIG. 2.

The continuous intersections of the angular sectors in the journal bearings disclosed herein are in contrast to the conventional two halves of the split bearings touching each other or mechanically joined to function as the journal bearing. The continuous intersections of the angular sectors are particularly advantageous to have seamless property variation from one angular sector to another without compromising the macrostructural integrity of the journal bearing or introducing abrupt microstructural and compositional variations in the journal bearing.

Various angular sectors in the journal bearing may be designed to suit various functionalities that may be required for the function, or advantageous for the enhanced performance of the journal bearing in comparison with the conventional journal bearings. Non-limiting examples of the functionalities of the journal bearing include load bearing, wear resistance, corrosion resistance, erosion resistance, scuffing resistance, seizure resistance, cavitation resistance, heat-dissipation, lubricant storage, lubricant dispersal to the surface of the shaft during operation, embeddability of small foreign particles in the lubricant, and measurement of various parameters, such as, for example, temperature, wear, amount of lubrication in between the journal bearing and the shaft.

A load bearing capacity of the journal bearing is the maximum value of cycling stress that the journal bearing can withstand. The journal bearing is desired to have a high load bearing capacity even after numerous number of cycles of the shaft during operation. In an example embodiment, the cycling stresses that are applied to the journal bearings are a result of combustion and inertia forces developed in an internal combustion engine employing the journal bearing. During operation, fatigue cracks may develop in the journal bearing, if the load on the journal bearing exceeds the fatigue strength of the journal bearing. These fatigue cracks may generate at sub surface and can spread to surface resulting in flaking of the material of the journal bearing.

Wear resistance of a journal bearing is the ability of the material of the journal bearing to maintain its dimensional stability despite the presence of abrasive foreign particles in the lubricant and under the conditions of intermittent, direct contact between the journal bearing and shaft materials. Embeddability is the ability of the material of the journal bearing to entrap small foreign particles such as, for example, dirt, debris, dust, and abrasive residuals circulating in the lubricating oil and trap those particles beneath the inner surface of the journal bearing. Poor embeddability of a material of the journal bearing causes accelerated wear and produces scratches on the surfaces of the shaft and journal bearing, which can further lead to seizure.

In operation of the system, a sliding friction between the shaft and the journal bearing is normally reduced by an addition of a lubricant between the rubbing surfaces. Engine bearings are normally lubricated by motor oil when constantly supplied in sufficient amounts to the bearing's surfaces. Lubricated friction is characterized by the presence of a thin film of the pressurized lubricant (hydrodynamic or squeeze film) between the surfaces of the bearing and the journal. In general, many engineering applications have hydrodynamic journal bearings. In hydrodynamic journal bearings, high rotation speed at relatively low loads results in hydrodynamic friction, which is characterized by stable film of the lubricant between the rubbing surfaces. No contact between the surfaces occurs in hydrodynamic lubrication. The lubricant film keeps the surfaces of the bearing and the shaft apart due to hydrodynamic pressure generated by the lubricant squeezed through the convergent gap between the eccentric journal and the bearing. The lubricant may be continuously supplied to the contact surfaces of the journal bearing and the shaft, and hence it is desirable for the journal bearings to have a lubricant storage and /or a continuous supply of lubricant and further to have a design and process to supply the required amount of lubricant to the contact surfaces of the shaft and the journal bearing during operation.

Heat generated in the journal bearings during operation, for example as a result of friction between the journal bearing and the shaft, should be effectively dissipated so that the equilibrium conditions of operation of the system are reached in a short time. Further, it is desirable to limit the generated average or equilibrium temperature such that the deterioration of the lubricant due to high thermal conditions is effectively controlled.

In some embodiments, the at least three angular sectors in the journal bearing include a load bearing sector, a heat dissipation sector, and a lubricant reservoir sector. Thus, in some embodiments, the journal bearing 120 has at least one load bearing sector, at least one heat-dissipation sector, and at least one lubricant reservoir sector. Non-limiting examples of other angular sectors include one or more angular embeddable sector specifically developed to enable foreign particle embeddability, entrapping sector having pockets specifically constructed to trap foreign particles.

In general, in the currently available journal bearings, the load bearing functionality of the journal bearings is accomplished by using a high strength material, such as, for example, steel to construct at least a lower half of the journal bearing. Due to the difficulties associated with constructing multiple parts of the bearing using different materials, the currently available journal bearings include the high-strength material as the major component of the at least lower half, even if the load bearing capability may be required only in a limited angular span of the lower half. In some embodiments, in the current disclosure, at least one angular sector of the at least three angular sectors may be exclusively constructed for accomplishing the load bearing capability of the journal bearing without the need for other angular sectors to include the high strength load bearing material. This construction aids enhanced life and performance of the journal bearings.

The at least three angular sectors may be constructed by any materials or any combination of materials that is best suited for the functionality requirement of each of the at least three angular sectors. For example, the load bearing sector may be constructed by a material that has high fatigue strength. Any adjacent angular sector, such as, for example, a heat-dissipation sector or a lubricant reservoir sector may be constructed by completely different materials than the load bearing sector, suiting the individual functionalities of the respective angular sectors. For example, the load bearing sector may be constructed using a high-strength steel or any high strength alloy, the heat-dissipation sector may be constructed of copper, and the lubricant reservoir sector may be constructed of a polymer having designed pores or micro channels to store and supply the lubricant. In some embodiments, the load bearing sector of the journal bearing is a solid structure comprising a material selected from the group consisting of a metal, an alloy, a ceramic, a composite, or any combinations of the foregoing materials. Non-limiting examples for the material of the load bearing sector include iron or high fatigue strength steels.

In an embodiment in accordance with the invention, the load bearing sector of the journal bearing is at a location that is expected to get a maximum load of the shaft. The location that is expected to get a maximum load of the shaft during operation is located at the direction of force F of the shaft, as shown, for example, in FIG. 4. The direction of force of the shaft may be in the direction of gravitational force (i.e. bottom B in FIG. 4) during idle or low rotational speed conditions of the shaft. In some embodiments, the direction of force may be in a slightly off position from the bottom B of a stationary journal bearing during operation of the system 100. In some embodiments, the load bearing sector of the journal bearing is within the ± 30° span from the bottom point of the journal bearing. A desired angular span of the load bearing sector depends on the expected variation in the direction of force of the shaft during operation of the system. In some embodiments, the angular span of the load bearing sector is less than 60°. In embodiments in accordance with the invention, the angular span of the load bearing sector is in a range from about 15 ° to about 40 °.

In some embodiments, the fatigue strength of the load bearing sector may be uniform throughout the load bearing sector. A hardness of the load bearing sector is desired to be maximum at the surface that comes into physical contact with the shaft as compared to the inner parts and the outer surface of the load bearing sector. Thus, in some embodiments, the load bearing sector of the journal bearing is constructed such that the hardness of the load bearing sector is maximum at the inner surface of the journal bearing. In some embodiments, a hardness of the load bearing sector decreases along a radial direction of the load bearing sector.

The heat dissipation sector of the journal bearing may include any high thermally conducting material such that the heat is dissipated from the inner surface to the outer surface of the journal bearing. Non-limiting examples for the high thermal conductivity material of the heat dissipation sector include copper, aluminum, silver, gold, or graphite.

In some embodiments, the heat dissipation sector of the journal bearing includes a high thermal conductivity material. In some embodiments, the heat dissipation sector of the journal bearing includes a solid structure comprising a network of high thermal conductivity metal channels, a solid structure comprising a miniature heat pipe, or any combinations of the foregoing. Thus, in some embodiments, the heat dissipation sector may be majorly constructed of a high thermal conductivity solid structure. In some embodiments, the heat dissipation sector includes a solid structure of low thermal conductivity or high thermal conductivity materials and further includes a network of high thermal conductivity metal channels that may be embedded in the solid structure. In some embodiments, the heat dissipation sector having the solid structure may be designed to include miniature heat pipes that assist in rapid dissipation of the heat generated in the inner surface of the journal bearing. The heat dissipation achieved in the joint-less, continuous journal bearings is comparatively higher than the heat-dissipation achieved in the conventional bearings having cast iron body. A high thermal conductivity material may have a thermal conductivity greater than 100 W/m-K.

The lubricant reservoir sector of the journal bearing may include a porous structure, that can retain the lubricant to be dispersed to the inner surface of the journal bearing and to the surface of the shaft that meets the journal bearing. In some embodiments, the lubricant reservoir sector may further include pores or micro channels that connect the lubricant reservoir to the inner surface of the journal bearing such that the lubricant from the lubricant reservoir may be disposed to the inner surface in a desired manner and quantity. In some embodiments, the lubricant reservoir sector is a porous structure including a plurality of pores such that a volume percentage of the plurality of pores increases along the radial direction of the lubricant reservoir sector. Thus, in some embodiments, the number of pores in the lubricant reservoir sector may increase along the radial direction. In some embodiments, the pore sizes may increase along the radial direction of the lubricant reservoir sector. In some embodiments, a radially outer portion of the lubricant reservoir sector may have more number of pores and/or larger pore sizes as compared to a radially inner portion. In some embodiments, sizes and number of pores in the radially inner portion of the lubricant reservoir sector controls the amount and manner of dispersion of the lubricant that is stored in the radially outer portion of the lubricant reservoir sector. In some embodiments, a plurality of fine pores of the outer portion may connect to micro channels to carry the lubricant to the interface of the shaft and journal bearing. In some embodiments, the lubricant reservoir sector may not span the entire length L1 of the joint-less, continuous body of the journal bearing.

In some embodiments, the lubricant may be supplied to the contact surfaces of the shaft and the journal bearing during operation using surface energy based mechanism, such as, for example, capillary action of the micro channels. In some embodiments, the functioning of the lubricant reservoir sector may be influenced by the force of gravity. Thus, the dispersion of the lubricant from the reservoir may be partially controlled by the gravity, in addition to one or more of the size, distribution, and volume fraction of the pores in the lubricant reservoir sector. Hence, in some embodiments, the lubricant reservoir sector is placed in an upper part of the journal bearing. In some embodiments, the lubricant reservoir sector of the journal bearing is located in a direction opposite to the direction of force, placing the lubricant reservoir sector in a direction opposite to the load bearing sector.

Formation of various angular sectors in the joint-less, continuous body of the journal bearing is achievable using additive manufacturing. The joint-less, continuous body of the journal bearing may be constructed by disposing one layer after the other layer in any particular direction of the journal bearing. For example, in some embodiments, the joint-less, continuous body of the journal bearing may be constructed lengthwise by disposing the layers to build up in a direction of the bore axis. In some other embodiments, the joint-less, continuous body of the journal bearing may be constructed widthwise by disposing the layers to build up in a direction perpendicular to the bore axis.

In a non-limiting example of lengthwise construction of the joint-less, continuous body of the journal bearing, a base layer having two or more angular sectors may be deposited using the materials of the two or more angular sectors at precisely demarcated locations. The angular sectors and the intersections of the angular sectors may be controlled by depositing the specific materials for the angular sectors and a mixture of the specific materials in a desired ratio to the intersections. Depending on the required number of angular sectors in the next layers, the materials may be added to increase the number of angular sectors. For example, if the second layer has three or more angular sectors, then the three or more materials corresponding to the three or more angular sectors may be deposited in a pre-determined manner. The various materials, their compositional, microstructural, and consistency, and position details may be pre-determined based on the requirement of the journal bearing during operation and stored in the form of software commands to be followed during manufacturing.

The angular sectors may be homogeneous throughout the area of the angular sector or may include macrostructural, microstructural, or compositional inhomogeneity within the angular sectors. In some embodiments, the angular sectors are inhomogeneous in radial, circumferential, or both in radial and circumferential directions. The macrostructural, microstructural, or compositional inhomogeneity in the angular sector may be introduced to enhance the performance and life of the journal bearing. An additive manufacturing method is particularly advantageous in forming the macrostructural, microstructural, and/or compositional inhomogeneity. The inhomogeneity in macrostructure, microstructure and composition may be easily achieved by designing the material to be deposited at different horizontal and vertical points. In some embodiments, at least one of the angular sectors includes an inhomogeneous region along a radial direction of the at least one angular sector. The inhomogeneity may be gradual or may be abrupt, depending on the requirements of the angular sectors at the time of operation. In some example embodiments, a hardness of the load bearing sector may be decreased along a radial direction of the angular sector. In some example embodiments, a density and /or strength of the material of the load bearing sector may be reduced along the radial direction of the load bearing sector. In some embodiments, the heat dissipation sector may include heat pipes or micro channels of high thermal conductivity material to carry the heat generated in the inner contacting surface of the journal bearing and/or from the load bearing sector. These heat pipes or micro channels of high thermal conductivity material may vary the macrostructural appearance of the heat dissipation sector along the circumference of the heat dissipation sector. In yet another example embodiment, the lubricant reservoir sector has pores with higher percentage of pore volume in the outer portions of the lubricant reservoir sector connected to the micro channels that are present in the inner portions of the lubricant reservoir sector. The lubricant reservoir sector may further include micro channels opening in the inner surface of the journal bearing for lubricant delivery to the contact surface of shaft and journal bearing.

In some embodiments, at least one of the at least three angular sectors of the journal bearing may further include one or more other regions that may not be related to the primary function of the specific angular sector, but may aid or enhance the performance of the journal bearing. For example, one or more angular sectors may include regions specifically developed to enable particle embeddability, pockets specifically constructed to trap foreign particles, thermocouples to monitor temperature and/or health conditions of the bearing, wear sensors to monitor the wear conditions of the bearing and shaft surfaces, or any combinations of the foregoing. In some embodiments, at least one of the angular sectors of the journal bearing includes a sensor, a probe, a cooling fin, or any combinations of the foregoing.

Considering the functionalities of the load bearing sector, heat dissipation sector and the lubricant reservoir sector, the load bearing sector is desired to be in the locations where the load of the shaft is experienced during operation. Therefore, the angular span of the load bearing sector may be designed to be limited to accommodate higher angular spans of the heat dissipation sector and the lubricant reservoir sector.

Depending on the expected heat generation during operation, and the material and construction of the heat dissipation sector, the heat dissipation sector may, in some embodiments, desired to be in higher angular span than the load bearing sector. A higher angular span of the lubricant reservoir sector aids in higher amount of lubricant storage and further in efficient lubricant dispersion to the inner surface. Therefore, in some embodiments, it is desired to maximize the angular span of the lubricant dissipation sector, without compromising on the functionalities of other angular sectors of the journal bearing. Thus, in some embodiments, an angular span of the load bearing sector is lower than at least one of an angular span of the heat dissipation sector or an angular span of the lubricant reservoir sector. Further, in certain embodiments, the angular span of the load bearing sector is lower than an angular span of the heat dissipation sector and the angular span of the heat dissipation sector is lower than the angular span of the lubricant reservoir sector. In embodiments according to the invention, the angular span of the lubricant reservoir sector is greater than 90°. In certain embodiments, the lubricant reservoir sector has an angular span greater than 120.

Depending on the functionalities of the load bearing sector, heat dissipation sector and the lubricant reservoir sectors, and further depending on the expected requirement of these functionalities during operation, the journal bearing may include more than one load bearing sectors, more than one heat dissipation sectors, and /or more than one lubricant reservoir sectors. For example, if the load bearing requirement is expected to be more in the angle 35 ° and at the angle 325 °, as measured from the bottom, during operation of the system 100, dual load bearing sectors encompassing these angular regions may be constructed having any other desirable angular sector in the bottom region. In another, non-limiting example having high heat generation due to friction at the load bearing sectors, a pair of heat dissipation sectors may be constructed on either side of the load bearing sector. In yet another non-limiting example, multiple lubricant reservoir sectors may be constructed at different angles covering smaller angular spans at each location, yet meeting the lubrication requirement of the system 100. In some embodiments, a combined angular span of all the load bearing sectors is less than a combined angular span of all the heat dissipation sectors and the combined angular span of all the heat dissipation sectors is less than a combined angular span of all the lubricant reservoir sectors.

In embodiments in accordance with the invention, the journal bearing includes two heat dissipation sectors, and the combined angular span of the at least two heat dissipation sectors is in a range from about 25 ° to about 180°. In the embodiments having two heat dissipation sectors in the journal bearing, the load bearing sector is constructed to be located along a radial direction of force of the shaft, the lubricant reservoir sector is constructed to be located opposite to the load bearing sector, and the at least two heat dissipation sectors are constructed such that the heat dissipation sectors neighbor both the load bearing sector and the lubricant reservoir sector in both sides.

In accordance with the invention the journal bearing includes a joint-less, continuous cylindrical body having an inner surface defining a bore to receive the shaft, and an outer surface. A cross-section of the joint- less, continuous body perpendicular to a bore axis includes four angular sectors. The four angular sectors include a load bearing sector, two heat dissipation sectors, and a lubricant reservoir sector. Each of these angular sectors extend along a length of the joint-less, continuous cylindrical body. The load bearing sector is located along a radial direction of force of the shaft, the lubricant reservoir sector is located opposite to the load bearing sector, and the two heat dissipation sectors neighbor the load bearing sector and the lubricant reservoir sector on both sides. The load bearing sector and the lubricant reservoir sector include at least one of a different microstructure, or a different composition than each of the neighboring heat dissipation sectors. Further, an angular span of the load bearing sector is in a range from about 15° to about 40°, a combined angular span of the two heat dissipation sectors is in a range from about 25° to about 180°, and an angular span of the lubricant reservoir sector is greater than 90°. This journal bearing is further described below using an example figure, FIG. 4.

The journal bearing 220 includes a joint-less, continuous cylindrical body having an inner surface 222 defining the bore 240 to receive the shaft 210, and an outer surface 224. The cross-section of the joint-less, continuous body perpendicular to a bore axis includes four angular sectors. The four angular sectors include a load bearing sector 232, two heat dissipation sectors 234 and 236, and a lubricant reservoir sector 238, each of these sectors extend along a length of the joint- less, continuous cylindrical body. The load bearing sector 232 is located along a radial direction of force of the shaft. The lubricant reservoir sector 238 is located opposite to the load bearing sector, and the two heat dissipation sectors 234 and 236 neighbor the load bearing sector 232 and the lubricant reservoir sector 238 in both sides. The load bearing sector 232 and the lubricant reservoir sector 238 include at least one of a different microstructure, or a different composition than each of neighboring heat dissipation sectors 234 and 236. Further, an angular span of the load bearing sector is in a range from about 15° to about 40°, a combined angular span of the two heat dissipation sectors is in a range from about 25° to about 180°, and an angular span of the lubricant reservoir sector is greater than 90°. In the illustrated FIG. 4, the load bearing sector 232 spans a region from about angle 350° (denoted as ε in FIG. 4) to about 30° (denoted as θ in FIG. 4) when measured from bottom B and in the direction of rotation R of the shaft. The journal bearing further includes a sensor 270 embedded in one of the angular sectors, in the lubricant reservoir sector 238 in the example illustrated in FIG. 4. Non-limiting examples of the sensor 270 includes temperature sensor and wear measurement sensor.

Advantageously, the present disclosure provides a long-life, high-performance journal bearing by combining different materials at different locations of the journal bearing to obtain an enhanced design space and enhanced functionality of the journal bearings, further ensuring efficient reduction of multiple manufacturing and assembling steps.

While the invention has been described in detail in connection with only a limited number of embodiments, such as, for example, angular sectors in an angular cross-section of a joint-less, continuous body of a journal bearing, it should be readily understood that the invention is not limited to such disclosed embodiments. Rather, the invention can be modified to incorporate any number of variations, alterations, substitutions or equivalent arrangements not heretofore described, but which are commensurate with the scope of the invention. For example, the radial boundaries of the angular sectors may be manufactured in a curved or irregular manner without affecting the functionalities of the angular sectors described herein. Additionally, while various embodiments of the invention have been described, it is to be understood that aspects of the invention may include only some of the described embodiments. Accordingly, the invention is not to be seen as limited by the foregoing description.

## Claims

1. A journal bearing (220) for a shaft (210) comprising:
a joint-less, continuous cylindrical body comprising an inner surface (222) defining a bore (240) to receive the shaft (210), and an outer surface (224), wherein a cross-section perpendicular to a bore axis of the joint-less, continuous cylindrical body comprises four angular sectors (232, 234, 236, 238) comprising a load bearing sector (232), two heat dissipation sectors (234, 236), and a lubricant reservoir sector (238), each extending along a length of the joint-less, continuous cylindrical body,
wherein the load bearing sector (232) is located along a radial direction of force (F) of the shaft (210), the lubricant reservoir sector (238) is located opposite to the load bearing sector (232), and the two heat dissipation sectors (234, 236) neighbor the load bearing sector (232) and the lubricant reservoir sector (238) in both sides,
wherein the load bearing sector (232) and the lubricant reservoir sector (238) comprise at least one of a different microstructure, or a different composition than each of neighboring heat dissipation sectors (234, 236), and
wherein an angular span of the load bearing sector (232) is in a range from 15° to 40°, a combined angular span of the two heat dissipation sectors (234, 236) is in a range from 25° to 180°, and an angular span of the lubricant reservoir sector (238) is greater than 90°.

2. The journal bearing (220) of claim 1, wherein the bore (240) of the continuous cylindrical body is a circular or an elliptical bore.

3. The journal bearing (220) of any preceding claim, wherein the angular sectors (232, 234, 236, 238) are blended with each other at intersections thereof.

4. The journal bearing (220) of claim 3, wherein the intersections comprise at least one of a microstructural gradation or a compositional gradation along an angular span.

5. The journal bearing (220) of claim 1, wherein the load bearing sector (232) is a solid structure comprising a material selected from the group consisting of a metal, an alloy, a ceramic, a composite, or combinations thereof.

6. The journal bearing (220) of claim 1, wherein a hardness of the load bearing sector (232) decreases along a radial direction of the load bearing sector (232).

7. The journal bearing (220) of claim 1, wherein the heat dissipation sectors (234, 236) comprise a high thermal conductivity material.

8. The journal bearing (220) of claim 1, wherein the lubricant reservoir sector (238) is a porous structure comprising a plurality of pores, wherein a volume percentage of the plurality of pores increases along the radial direction of the lubricant reservoir sector (238).

9. The journal bearing (220) of claim 1, wherein at least one of the angular sectors (232, 234, 236, 238) comprises an inhomogeneous region along a radial direction of the at least one angular sector.

10. The journal bearing (220) of claim 1, wherein at least one of the angular sectors (232, 234, 236, 238) further comprises a sensor, probe, a cooling fin, or combinations thereof.

## Patentansprüche

1. Gleitlager (220) für eine Welle (210), das Folgendes umfasst:
einen fugenlosen, durchgängigen, zylindrischen Körper, der eine durch eine Bohrung (240) definierte Innenfläche (222) zur Aufnahme der Welle (210) aufweist und eine Außenfläche (224) umfasst,
wobei ein Querschnitt senkrecht zu einer Bohrungsachse (126) des fugenlosen, durchgängigen, zylindrischen Körpers vier Winkelsektoren (232, 234, 236, 238) umfasst, die einen lasttragenden Sektor (232), zwei Wärmeableitungssektoren (234, 236) und einen Schmierstoffreservoirsektor (238) umfassen, die sich jeweils entlang einer Länge des fugenlosen, durchgängigen, zylindrischen Körpers erstrecken,
wobei der lasttragende Sektor (232) entlang einer radialen Richtung einer Kraft (F) der Welle (210) angeordnet ist, der Schmierstoffreservoirsektor (238) gegenüber dem lasttragenden Sektor (232) angeordnet ist, und die beiden Wärmeableitungssektoren (234, 236) zu beiden Seiten neben dem lasttragenden Sektor (232) und dem Schmierstoffreservoirsektor (238) angeordnet sind,
wobei der lasttragende Sektor (232) und der Schmierstoffreservoirsektor (238) ein anderes Gefüge und/oder eine andere Zusammensetzung aufweisen als jeder der benachbarten Wärmeableitungssektoren (234, 236), und
wobei eine Winkelspanne des lasttragende Sektors (232) in einem Bereich von 15° bis 40° liegt, eine kombinierte Winkelspanne der beiden Wärmeableitungssektoren (234, 236) in einem Bereich von 25° bis 180° liegt, und eine Winkelspanne des Schmierstoffreservoirsektors (238) größer als 90° ist.

2. Gleitlager (220) nach Anspruch 1, wobei die Bohrung (240) des durchgängigen zylindrischen Körpers eine kreisförmige oder elliptische Bohrung ist.

3. Gleitlager (220) nach einem der vorangehenden Ansprüche, wobei die Winkelsektoren (232, 234, 236, 238) an ihren Schnittpunkten ineinander übergehen.

4. Gleitlager (220) nach Anspruch 3, wobei die Schnittpunkte einen Gefügeübergang und/oder einen Zusammensetzungsübergang entlang einer Winkelspanne umfassen.

5. Gleitlager nach Anspruch 1, wobei der lasttragende Sektor (232) aus einer soliden Struktur besteht, welche durch eine der folgenden Materialgruppen gebildet wird:
einem Metall, einer Legierung, einer Keramik, einem Verbundstoff oder einer Kombination daraus.

6. Gleitlager (220) nach Anspruch 1, wobei eine Härte des lasttragenden Sektors (232) entlang einer radialen Richtung des lasttragenden Sektors (232) abnimmt.

7. Gleitlager (220) nach Anspruch 1, wobei die Wärmeableitungssektoren (234, 236) ein Material mit hoher Wärmeleitfähigkeit umfassen.

8. Gleitlager (220) nach Anspruch 1, wobei der Schmierstoffreservoirsektor (238) eine poröse Struktur ist, die eine Mehrzahl an Poren aufweist, wobei ein Volumenprozentsatz der Mehrzahl an Poren entlang der radialen Richtung des Schmierstoffreservoirsektors (238) zunimmt.

9. Gleitlager (220) nach Anspruch 1, wobei mindestens einer der Winkelsektoren (232, 234, 236, 238) eine inhomogenen Bereich entlang einer radialen Richtung des mindestens einen Winkelsektors umfasst.

10. Gleitlager (220) nach Anspruch 1, wobei mindestens einer der Winkelsektoren (232, 234, 236, 238) des Weiteren einen Sensor, eine Sonde, eine Kühlrippe oder Kombinationen daraus umfasst.

## Revendications

1. Palier lisse (220) pour un arbre (210) comprenant :
un corps cylindrique continu sans articulation comprenant une surface interne (222) définissant un alésage (240) pour recevoir l'arbre (210), et une surface externe (224), dans lequel une section transversale perpendiculaire à un axe d'alésage de corps cylindrique continu sans articulation comprend quatre secteurs angulaires (232, 234, 236, 238) comprenant un secteur porteur de charge (232), deux secteurs de dissipation thermique (234, 236), et un secteur de réservoir de lubrifiant (238), chacun s'étendant suivant une longueur du corps cylindrique continu sans articulation,
dans lequel le secteur porteur de charge (232) est situé suivant une direction radiale de force (F) de l'arbre (210), le secteur de réservoir de lubrifiant (238) est situé à l'opposé du secteur porteur de charge (232), et les deux secteurs de dissipation thermique (234, 236) sont voisins du secteur porteur de charge (232) et du secteur de réservoir de lubrifiant (238) sur les deux côtés,
dans lequel le secteur porteur de charge (232) et le secteur de réservoir de lubrifiant (238) comprennent au moins l'une d'une microstructure différente, ou d'une composition différente de chacun des secteurs de dissipation thermique (234, 236) voisins, et
dans lequel une couverture angulaire du secteur porteur de charge (232) se situe dans une plage de 15° à 40°, une couverture angulaire combinée des deux secteurs de dissipation thermique (234, 236) se situe dans une plage de 25° à 180°, et une couverture angulaire du secteur de réservoir de lubrifiant (238) est supérieure à 90°.

2. Palier lisse (220) selon la revendication 1, dans lequel l'alésage (240) du corps cylindrique continu est un alésage circulaire ou elliptique.

3. Palier lisse (220) selon l'une quelconque des revendications précédentes, dans lequel les secteurs angulaires (232, 234, 236, 238) sont mélangés les uns avec les autres à leurs intersections.

4. Palier lisse (220) selon la revendication 3, dans lequel les intersections comprennent au moins l'une d'une gradation microstructurelle ou d'une gradation compositionnelle suivant une couverture angulaire.

5. Palier lisse (220) selon la revendication 1, dans lequel le secteur porteur de charge (232) est une structure solide comprenant un matériau choisi dans le groupe constitué par un métal, un alliage, une céramique, un composite, ou des combinaisons de ceux-ci.

6. Palier lisse (220) selon la revendication 1, dans lequel une dureté du secteur porteur de charge (232) diminue suivant une direction radiale du secteur porteur de charge (232).

7. Palier lisse (220) selon la revendication 1, dans lequel les secteurs de dissipation thermique (234, 236) comprennent un matériau à conductivité thermique élevée.

8. Palier lisse (220) selon la revendication 1, dans lequel le secteur de réservoir de lubrifiant (238) est une structure poreuse comprenant une pluralité de pores, dans lequel un pourcentage volumique de la pluralité de pores augmente suivant la direction radiale du secteur de réservoir de lubrifiant (238).

9. Palier lisse (220) selon la revendication 1, dans lequel au moins l'un des secteurs angulaires (232, 234, 236, 238) comprend une région non homogène suivant une direction radiale de l'au moins un secteur angulaire.

10. Palier lisse (220) selon la revendication 1, dans lequel au moins l'un des secteurs angulaires (232, 234, 236, 238) comprend en outre un capteur, une sonde, une ailette de refroidissement, ou des combinaisons de ceux-ci.
